# FASCICULE DE BREVET EUROPEEN

(11) **EP 2 139 198 B1**
(45) Date de publication et mention de la délivrance du brevet: **04.03.2015**
(21) Numéro de dépôt: 09162898.2
(22) Date de dépôt: 17.06.2009
(51) Int. Cl.: H04L 12/701, H04L 12/773, H04L 29/06

(54) **Routeur associé à un dispositif sécurisé**
Router mit verknüpfter gesicherter Vorrichtung
Router associated with a secure device

(30) Priorité: 24.06.2008 FR 0854201
(43) Date de publication de la demande: 30.12.2009
(73) Titulaire: ALCATEL LUCENT, 92100 Boulogne-Billancourt (FR)
(72) Inventeur: Onfroy, Emmanuel, 92707, COLOMBES (FR); Bulut, Evren, 91300, MASSY (FR); Marquet, Bertrand, 91620, NOZAY (FR); Araujo, José, 91620, NOZAY (FR); Ansiaux, Arnaud, 91620, NOZAY (FR)
(74) Mandataire: Sciaux, Edmond

(56) Documents cités:
- EP-A- 1 179 915
- EP-A- 1 599 019
- US-A1- 2006 101 506

## Description

La présente invention concerne un routeur associé à un dispositif sécurisé dans un réseau de communication par paquets.

Un routeur est un équipement informatique inclus dans un réseau de communication donné, tel qu'un réseau de paquets, qui a pour fonctionnalité notamment d'assurer une jonction entre le réseau donné et au moins un autre réseau, de diriger des paquets de données à travers le réseau donné et de transmettre des paquets de données du réseau donné à un autre réseau.

Une attaque à l'encontre d'un routeur peut engendrer un dysfonctionnement du routeur et différentes conséquences néfastes, telles qu'une panne du réseau, une interruption de service, une perturbation des activités des utilisateurs du réseau, ainsi que de nombreux coûts et une publicité négative.

De telles attaques ont souvent pour cible des routeurs en raison du rôle critique de routeurs dans un réseau et peuvent être de différents types, tels qu'une attaque dite d'homme au milieu ("man in the middle" en anglais) pour surveiller des trafics de données dans le réseau, une attaque de dénis de service, ou une attaque de subversion.

Dans le cas d'une attaque de subversion, l'attaquant peut être connecté au routeur avec des droits actuels d'utilisateur ou éventuellement avec des droits d'administrateur. Ces droits autorisent l'attaquant à modifier la configuration du routeur et à contrôler tout processus qui est exécuté dans le routeur.

Il existe divers protocoles de routage, tels que le protocole OSPF ("Open Shortest Path First" en anglais), BGP ("Border Gateway Protocol" en anglais), ou RIP (Routing Information Protocol" en anglais), pour aiguiller des trafics de données à travers des réseaux. Lors d'une attaque de subversion, l'attaquant peut modifier le processus qui génère des messages du protocole de routage afin d'utiliser de fausses adresses et de diriger des paquets de données à travers de mauvaises routes. Par exemple, des paquets de données peuvent être dirigés vers un équipement de l'attaquant afin que ce dernier puisse accéder à ces paquets de données pour éventuellement les modifier. Ces informations de mauvaises routes peuvent être propagées à tous les routeurs du réseau.
EP 1599019 prévoit d'implémenter les éléments à la sécurité de l'équipement de réseau sur un équipement externe sécurisé. Il est stipulé que l'élément de réseau mémorise des éléments de sécurité ou de configuration pour des opérations de gestion et que le dispositif d'exécution est apte à exécuter des fonctions de contrôle et de gestion. L'élément de réseau contient une carte de contrôle pour contrôler la fonctionnalité de sécurité de l'élément de réseau d'une part, et un dispositif d'exécution pour exécuter des fonctions sécurisées sélectionnées de gestion et de contrôle.

Pour assurer une sécurité dans les échanges de données entre deux routeurs d'un réseau, certains mécanismes authentifient tous les messages générés par le protocole de routage utilisé par le réseau. Cette authentification est exécutée au moyen de clés secrètes qui sont déployées et mémorisées dans tous les routeurs du réseau et qui peuvent être changées par l'administrateur de chaque routeur. Ces mécanismes d'authentification ont les inconvénient suivants:
- lorsqu'un attaquant est en possession des droits d'administrateur d'un routeur, l'attaquant peut modifier des clés secrètes requises pour des fonctions de sécurité du routeur,
- un attaquant peut éventuellement altérer l'implémentation du protocole de routage pour modifier le contenu de messages reçus ou envoyés, et
- la gestion de clés secrètes est très lourde si bien que les clés secrètes ne sont généralement jamais changées.

Il existe donc un besoin pour un opérateur de réseau de paquets d'éviter ou de limiter les conséquences d'une attaque à l'encontre d'un routeur du réseau, lors de laquelle un attaquant peut diriger tout ou partie d'un trafic de données vers une adresse corrompue du réseau.

Un objectif de l'invention est de remédier aux inconvénients précédents en améliorant la sécurité des routeurs dans un réseau de paquets.

La présente invention est définie par l'objet des revendications indépendantes. Modes de réalisation préférés sont définis par les revendications dépendantes.

Pour atteindre cet objectif, l'invention fournit un routeur associé à un dispositif sécurisé et inclus dans un réseau de communication.

Le routeur comprend des moyens pour identifier une partie de protocole de routage à exécuter et pour déterminer par quelle entité, parmi le routeur et le dispositif sécurisé, la partie de protocole de routage identifiée est à exécuter. Cette identification peut être effectuée au moyen d'une table de correspondance entre des premières parties de protocole de routage et le routeur et entre des deuxièmes parties de protocole de routage et le dispositif de sécurité, les premières et deuxièmes parties de protocole étant distinctes et définissant complètement le protocole de routage.

Ladite au moins une partie de protocole de routage correspond à un algorithme pour la création ou la modification d'une table de routage mémorisée dans le dispositif sécurisé.

L'invention concerne également un dispositif sécurisé associé à un routeur inclus dans un réseau de communication. .

L'invention concerne encore un procédé.

La présente invention et les avantages qu'elle procure seront mieux compris au vu de la description ci-après faite en référence aux figures annexées, dans lesquelles :
- la figure 1 est un bloc-diagramme schématique d'un routeur associé à un dispositif de confiance et inclus dans un réseau de paquets selon l'invention; et
- la figure 2 est un algorithme d'un procédé d'exécution de partie de protocole de routage dans un dispositif de confiance associé à un routeur selon l'invention.

Préalablement, quelques termes et concepts utiles à la compréhension de l'invention sont définis ci-après.

Un routeur est un matériel informatique de communication dans un réseau de communication destiné au routage de messages. Plus particulièrement, le routeur contrôle la diffusion de messages à travers le réseau et peut déterminer un noeud du réseau le plus proche auquel un paquet de données est à envoyer, afin que ce paquet atteigne une cible prédéterminée du réseau le plus rapidement possible. A cette fin, le routeur a en mémoire une table de routage qui contient les chemins les plus courts vers d'autres routeurs du réseau en fonctions de métriques associées à ces chemins. En d'autres termes, une table de routage est une table de correspondance entre l'adresse du réseau de la cible visée du réseau et le noeud suivant auquel le routeur doit transmettre le message. Ce processus nommé "routage" intervient au niveau de la couche "réseau" du modèle OSI ("Open System lnterconnected" en anglais) et est généralement associé au protocole IP ("Internet Protocol" en anglais).

Un routeur peut être un ordinateur dédié au routage, comprenant notamment une carte mère, un microprocesseur, un système d'exploitation et des ressources de réseau nécessaires pour communiquer avec d'autres entités, tels que des serveurs ou d'autres routeurs.

Un protocole de routage permet d'échanger des informations de routage entre des routeurs et de définir des modalités d'échange entre les différentes applications utilisées, par exemple l'envoi d'un message ou l'accusé de réception d'un message, et plus particulièrement de définir les caractéristiques d'un message échangé, telles que des identificateurs des routeurs concernés par l'échange du message, la nature et le contenu du message, et le traitement attendu du message.

Un routeur a différentes fonctionnalités relatives à trois plans:
- un plan de contrôle qui compile une table de routage à partir d'informations récupérées par le ou les protocoles de routage du routeur,
- un plan de données qui regroupe les fonctionnalités de retransmission pour router des paquets vers une destination souhaitée, et
- un plan de gestion qui gère le routeur par exemple depuis une interface à ligne de commande ou depuis un administrateur réseau.

L'invention ajoute un plan de confiance au routeur au moyen d'un dispositif de confiance associé au routeur. Le plan de confiance offre des fonctionnalités permettant de fournir des informations fiables à l'issue d'un traitement sécurisé de données sûres. Par exemple, le dispositif de confiance est fourni par un fournisseur d'équipements de réseau et configuré par l'opérateur du réseau ou l'administrateur du réseau.

Un exemple d'obtention d'un dispositif de confiance, tel qu'une carte à puce, par l'opérateur du réseau est décrit ci-après. Un fabricant de carte fournit une carte à puce ainsi qu'une clé secrète d'initialisation à un fournisseur d'équipements de réseau. Cette clé secrète d'initialisation permet au fournisseur d'installer dans la carte des appliquettes ("applets" en anglais, programmes chargés et exécutés dans la carte à puce), des données, notamment relatives à un routeur associé à la carte, des algorithmes de protocole et des clés secrètes. Lorsque l'installation est terminée, selon des accords établis entre le fournisseur et l'opérateur de réseau, le fournisseur a la possibilité de supprimer la clé secrète et les applets installées ne peuvent plus être modifiées, ou bien a la possibilité de ne pas supprimer la clé secrète et les applets installées peuvent être mises à jour. Le fournisseur peut alors vendre le routeur associé à la carte à puce à l'opérateur de réseau. Le dispositif de confiance devient associé au routeur lorsque ce dernier est configuré et utilisé la première fois. Selon la politique de l'opérateur, le dispositif de confiance peut être associé définitivement et irrémédiablement au routeur, ou bien peut être modifié ou mis à jour via un équipement dédié à cette fonction.

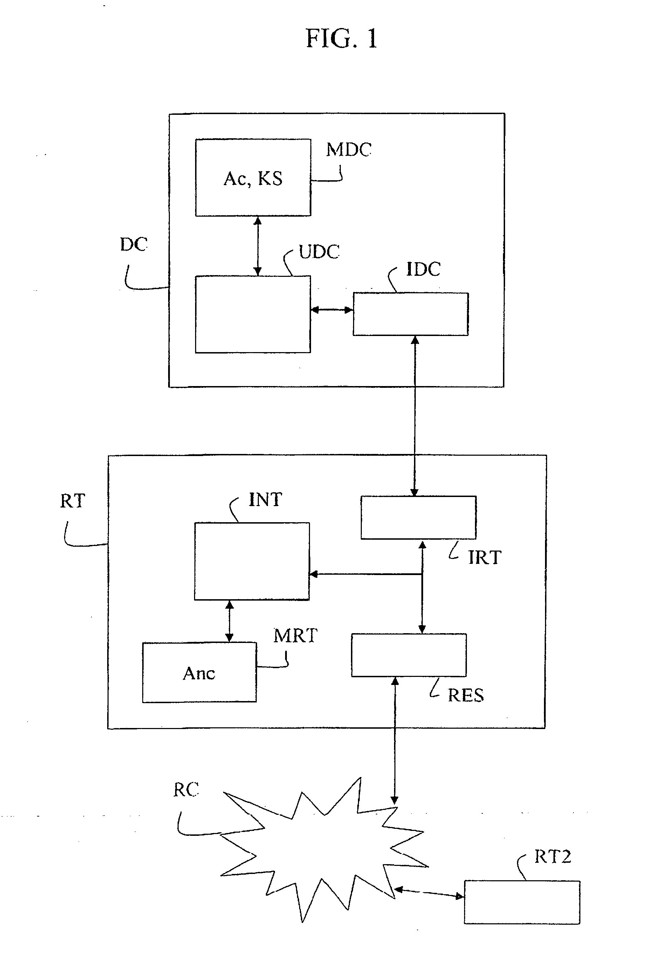

En référence à la figure 1, un routeur RT est inclus dans un réseau de communication RC et associé à un dispositif de confiance DC. Le routeur RT est apte à communiquer avec au moins un autre routeur RT2 du réseau de paquets.

Le réseau de communication RC est par exemple un réseau à haut débit de type IP ("Internet Protocol" en anglais), tel que l'internet ou un intranet ou encore un réseau privé spécifique à une société.

Le routeur RT comprend une interface d'accès IRT pour communiquer avec le dispositif de confiance DC, un interpréteur de protocole INT pour exécuter des parties de protocole de routage dites "non critiques", une mémoire MRT dans laquelle sont mémorisés notamment des algorithmes prédéterminés correspondant à des parties de protocole de routage non critiques, appelés par la suite algorithmes non critiques Anc, et une interface réseau RES pour communiquer avec des entités du réseau de communication RC, tel qu'un autre routeur RT2.

Le dispositif de confiance DC comprend une interface d'accès IDC pour communiquer avec le routeur RT, une unité de traitement UDC pour exécuter des parties de protocole de routage dites "critiques", et une mémoire MDC dans laquelle sont mémorisés notamment des clés secrètes KS et des algorithmes prédéterminés correspondant là des parties de protocole de routage critiques, appelés par la suite algorithmes critiques Ac.

Tous les algorithmes correspondant à toutes les parties d'un protocole de routage sont donc mémorisés de manière partagée dans le routeur et le dispositif de confiance et l'implémentation du protocole de routage est ainsi répartie pour sa partie non critique dans le routeur et pour sa partie critique dans le dispositif de routage. Les parties critiques du protocole peuvent donc être distinctes et complémentaires des parties non critiques du protocole de sorte que les parties critiques et non critiques définissent complètement le protocole de routage. A titre d'exemple, lesdites parties critiques peuvent être des algorithmes pour générer certaines informations, par exemple afin de construire ou authentifier des messages, ou afin de créer ou modifier des bases de données ou une table de routage. Lesdites parties critiques peuvent être des fonctions qu'un attaquant souhaiterait utiliser pour réaliser une attaque de subversion. Les parties de protocole non critiques exécutées par le routeur sont considérées comme non sécurisées et non fiables alors que les parties de protocole critiques sont considérées comme sécurisées et fiables.

Par conséquent, le plan de confiance gère des parties critiques de protocole tandis que le plan de contrôle gère des parties non critiques de protocole.

Le dispositif de confiance DC est un dispositif sécurisé, inviolable, qui implémente un concept d'isolation d'exécution de processus. Le dispositif de confiance DC est par exemple une carte à puce amovible, également dite carte à microcontrôleur ou carte à circuit intégré, avec ou sans contact, accessible depuis le routeur via un moyen de communication, par exemple de type radio fréquences. Selon un autre exemple, le dispositif de confiance est un module matériel de sécurité HSM ("hardware Security Module" en anglais) ayant des fonctions cryptographiques, et peut être du type carte électronique enfichable embarquée dans le routeur ou du type boîtier externe connecté au routeur via une liaison avec ou sans contact.

Le routeur RT et le dispositif de confiance DC communiquent entre eux via les interfaces d'accès IRT et IDC respectives, au moyen de clés de communication partagées. Par exemple, le routeur RT peut demander un code d'identification au dispositif de confiance DC avant d'établir une communication avec ce dernier. Ces clés de communication empêchent toute exécution du dispositif de confiance sur un autre routeur.

Le routeur RT et le dispositif de confiance DC sont associés, c'est-à-dire peuvent être connectés entre eux via une liaison filaire ou sans fil. Par exemple, le dispositif de confiance DC est une carte à puce avec ou sans contact qui peut être introduite dans un lecteur approprié du routeur RT.

Optionnellement, le routeur RT comprend un contrôleur de présence pour détecter si le routeur RT est bien associé au dispositif de confiance DC, et pour alimenter le dispositif de confiance en électricité le cas échéant.

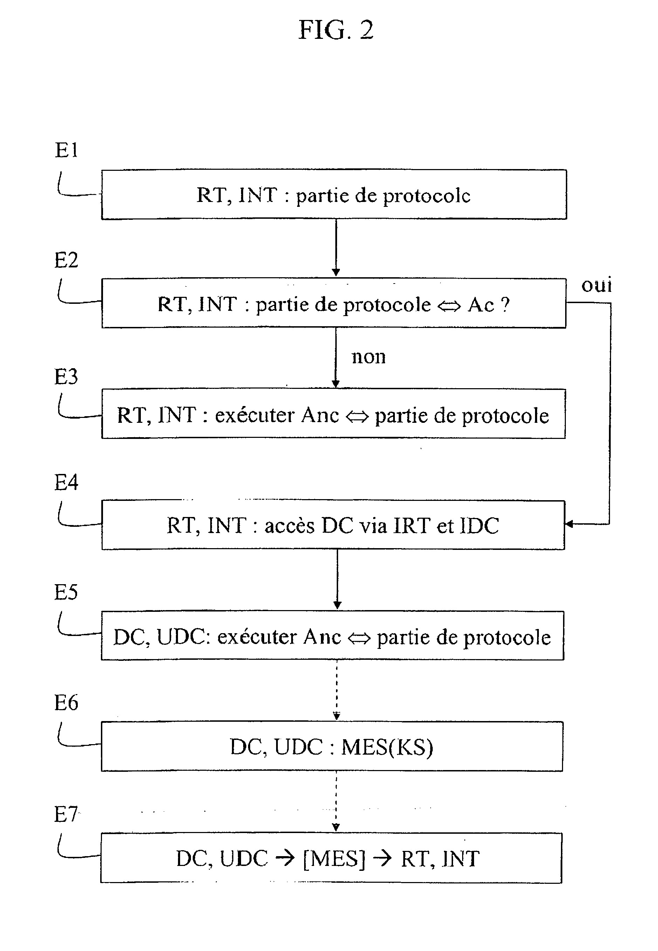

En référence à la figure 2, un procédé d'exécution de partie de protocole de routage dans un dispositif de confiance associé à un routeur selon l'invention comprend des étapes Et à E7 exécutées automatiquement en partie dans le routeur et en partie dans le dispositif de confiance selon l'invention.

A l'étape E1, selon le protocole de routage utilisé par le routeur RT, un événement déclenche l'exécution d'une partie du protocole par le routeur. Cet événement est par exemple la réception d'une requête par le routeur via l'interface réseau RES depuis un autre routeur du réseau de communication RC. L'interpréteur de protocole INT identifie la partie de protocole qui est à exécuter.

A l'étape E2, l'interpréteur de protocole INT du routeur détermine si la partie de protocole identifiée peut être exécutée par le routeur ou par le dispositif de confiance, c'est-à-dire vérifie si la partie de protocole correspond à un algorithme critique Ac ou à un algorithme non critique Anc. A cette fin, l'interpréteur de protocole consulte par exemple une table de correspondance dans laquelle chaque partie du protocole est associée au routeur ou au dispositif de confiance.

Si cette partie de protocole est non critique, alors le routeur exécute lui-même les algorithmes Anc correspondant à cette partie de protocole non critique, à l'étape E3.

Si cette partie de protocole est critique et donc associée au dispositif de confiance dans la table de correspondance, l'interpréteur de protocole requiert un accès au dispositif de confiance DC via les interfaces d'accès IRT et IDC, à l'étape E4. Après une authentification du routeur auprès du dispositif de confiance, ces derniers peuvent communiquer entre eux et l'interpréteur de protocole commande au dispositif de confiance l'exécution de la partie de protocole critique, par exemple en lui transmettant notamment un identificateur de cette partie de protocole ou de l'algorithme correspondant.

A l'étape E5, l'unité de traitement UDC du dispositif de confiance exécute le ou les algorithmes critiques Ac mémorisés dans la mémoire MDC et correspondant à la partie de protocole critique, par exemple au moyen de l'identificateur reçu de l'algorithme critique Ac.

A l'étape optionnelle E6, selon la nature de l'algorithme critique exécuté à l'étape E5, l'unité de traitement UDC produit un message MES à l'issue de l'exécution de la partie de protocole et signe le message produit au moyen d'une clé secrète KS mémorisé dans la mémoire MDC. Par exemple, l'étape E6 est exécutée si l'algorithme critique correspond à la création d'un message de contrôle requis par le protocole de routage utilisé, et l'étape E6 n'est pas exécutée si l'algorithme critique correspond à la modification d'une table de routage mémorisée dans le dispositif de confiance.

A l'étape optionnelle E7, l'unité de traitement UDC transmet le message signé MES à l'interpréteur de protocole INT qui peut alors traiter ce message comme si le message avait été produit par l'interpréteur de protocole, c'est-à-dire peut par exemple transmettre le message signé à un autre routeur. Le message MES étant signé, le routeur ne peut plus modifier le contenu du message.

Selon une réalisation de l'invention, le dispositif de confiance DC exécute des parties critiques d'au moins un protocole de routage, tel que le protocole OSPF, BGP, ou RIP. Selon un exemple particulier de l'invention, le dispositif de confiance DC exécute le protocole HELLO qui est une partie critique du protocole OSPF permettant à des routeurs de se découvrir les uns les autres afin de s'échanger des informations de routage. Chaque routeur transmet un message de contrôle vers des routeurs voisins à des intervalles de temps réguliers, le message contenant un numéro de séquence cryptographique qui est incrémenté au cours du temps. Le protocole Hello permet d'établir des relations d'adjacences entre des routeurs et notamment d'élire un routeur désigné DR ("Designated Router" en anglais) et un routeur désigné de secours BDR ("Backup Designated Routier" en anglais) pour chaque réseau local dans un réseau de communication selon le protocole OSPF.

Un message de contrôle envoyé par un routeur donné contient en outre des informations sur les routeurs voisins connus et l'état des liens entre le routeur donné et les routeurs voisins.

Un exemple d'implémentation du protocole HELLO dans le dispositif de confiance DC associé au routeur RT est décrit ci-après.

Dès qu'un routeur est opérationnel, il émet régulièrement un message de contrôle HELLO via toutes les interfaces dédiées au protocole OSPF du routeur. Un routeur ayant reçu un message HELLO transmet une réponse au routeur voisin. A cette fin, l'interpréteur INT identifie le protocole HELLO comme une partie de protocole critique du protocole OSPF et commande au dispositif de confiance l'exécution d'algorithmes de construction de message HELLO. L'unité de traitement UDC construit alors un message HELLO puis signe ce message avant de le transmettre à l'interpréteur de protocole INT du routeur, qui à son tour peul transmettre le message à un autre routeur.

Le traitement du protocole HELLO par le dispositif sécurisé garantit ainsi que le message HELLO est authentique et provient d'une source sûre.

Lors d'une attaque de subversion à l'encontre d'un routeur, l'attaquant peut modifier le système d'exploitation, le protocole de routage et les clés secrètes incluses dans un routeur qui n'est pas associé à un dispositif de confiance.

Selon l'invention, le routeur attaqué peut devenir isolé pour éviter la propagation de l'attaque à tout le réseau. En effet, si le dispositif de confiance n'est pas utilisé, le routeur devient isolé puisqu'il ne peut plus accéder aux algorithmes et données incluses dans le dispositif de confiance et conformes au protocole de routage requis.

Par exemple, pour le protocole de routage OSPF, le routeur attaqué ne peut plus signer et authentifier correctement des messages HELLO et les autres routeurs perdent la connaissance de ce routeur attaqué. Le routeur attaqué disparaît des tables de routage connues des autres routeurs et le trafic de données ne passera plus par le routeur attaqué.

Le routeur devient ainsi isolé dans les cas suivants :
- lorsque l'attaquant modifie des clés de communication partagées entre le routeur et le dispositif de confiance ou déconnecte le dispositif de confiance du routeur, tout message produit par le routeur ne peut plus être signé et authentifié par le dispositif de confiance et par conséquent un tel message ne peut être envoyé à de routeurs voisins,
- lorsque l'attaquant modifie des données d'un message de contrôle reçu, l'attaquant ne peut pas signer le message et le dispositif de confiance ne peut pas accepter le message de contrôle, car le routeur ne peut pas authentifier le message. Par la suite, le routeur attaqué ne recevra plus d'informations depuis les routeurs voisins et ne peut plus répondre aux messages de ces derniers, et
- lorsque l'attaquant modifie des données d'un message de contrôle qui est signé par le dispositif de confiance et à envoyer à un autre routeur, l'attaquant ne peut pas signer le message modifié et un tel message modifié ne sera pas accepté par un autre routeur.

## Revendications

1. Routeur associé à un dispositif sécurisé (DC) et inclus dans un réseau de communication (RC), comprenant une interface (IRT) pour communiquer avec le dispositif sécurisé après une authentification du routeur par le dispositif sécurisé, **caractérisé en ce qu'**il comprend:
des moyens (INT) pour identifier une partie de protocole de routage à exécuter, ladite partie de protocole de routage correspondant à un algorithme pour la création ou la modification d'une table de routage mémorisée dans le dispositif sécurisé,
des moyens (INT) pour déterminer par quelle entité, parmi le routeur et le dispositif sécurisé, la partie de protocole de routage identifiée est à exécuter,
des moyens (INT) pour commander l'exécution de la partie identifiée de protocole de routage par le dispositif sécurisé, suite à une authentification du routeur par le dispositif sécurisé, le dispositif sécurisé étant apte à produire un message et signer le message produit suite à l'exécution de ladite au moins une partie d'un protocole de routage et à transmettre le message signé au routeur.

2. Routeur conforme à la revendication 1, comprenant une table de correspondance entre des premières parties de protocole de routage et le routeur et entre des deuxièmes parties de protocole de routage et le dispositif sécurisé, les premières et deuxièmes parties de protocole étant distinctes et définissant complètement le protocole de routage.

3. Routeur conforme à la revendication 1 ou 2, **caractérisé en ce que** ladite au moins une partie de protocole de routage correspond à un algorithme pour la création d'un message de contrôle requis par le protocole de routage.

4. Dispositif sécurisé associé à un routeur inclus dans un réseau de communication (RC), comprenant une interface (IDC) pour communiquer avec le routeur après une authentification du routeur par le dispositif sécurisé, **caractérisé en ce qu'**il comprend:
des moyens (UDC) pour exécuter au moins une partie d'un protocole de routage sous la commande du routeur, le routeur ayant identifié une partie de protocole de routage à exécuter et déterminé par quelle entité, parmi le routeur et le dispositif sécurisé, la partie de protocole de routage identifiée est à exécuter, ladite partie de protocole de routage correspondant à un algorithme pour la création ou la modification d'une table de routage mémorisée dans le dispositif sécurisé,
des moyens (UDC) pour produire un message et signer le message produit suite à l'exécution de ladite au moins une partie d'un protocole de routage et pour transmettre le message signé au routeur.

5. Dispositif conforme à la revendication 4, **caractérisé en ce que** le dispositif sécurisé est une carte à puce.

6. Procédé pour exécuter de manière sécurisée une partie de protocole de routage dans un réseau de communication (RC), **caractérisé en ce qu'**il comprend dans un routeur (RT) associé à un dispositif sécurisé les étapes de :
identifier (E1) une partie de protocole de routage à exécuter, ladite partie de protocole de routage correspondant à un algorithme pour la création ou la modification d'une table de routage mémorisée dans le dispositif sécurisé,
déterminer (E2) par quelle entité, parmi le routeur et un dispositif sécurisé associé au routeur, la partie de protocole de routage identifiée est à exécuter, et
suite à une authentification du routeur par le dispositif sécurisé, commander (E4) l'exécution de la partie d'un protocole de routage par le dispositif sécurisé,
et **en ce qu'**il comprend dans le dispositif sécurisé les étapes d'exécuter (E5) la partie d'un protocole de routage sous la commande du routeur, de produire (E6) un message et signer le message produit suite à l'exécution de ladite au moins une partie d'un protocole de routage et de transmettre (E7) le message signé au routeur.

## Patentansprüche

1. Router, welcher mit einer gesicherten Vorrichtung (DC) assoziiert und in einem Kommunikationsnetzwerk (RC) umfasst ist und eine Schnittstelle (IRT) für die Kommunikation mit der gesicherten Vorrichtung nach Authentifizierung des Routers durch die gesicherte Vorrichtung aufweist, **dadurch gekennzeichnet, dass** er umfasst:
Mittel (INT) zum Identifizieren eines auszuführenden Teils eines Routing-Protokolls, wobei der besagte Teil des Routing-Protokolls einem Algorithmus für die Erstellung oder Änderung einer in der gesicherten Vorrichtung gespeicherten Routing-Tabelle entspricht,
Mittel (INT) zum Ermitteln, durch welche Entität unter dem Router und der gesicherten Vorrichtung der identifizierte Teil des Routing-Protokolls auszuführen ist,
Mittel (INT) zum Steuern der Ausführung des identifizierten Teils des Routing-Protokolls durch die gesicherte Vorrichtung im Anschluss an eine Authentifizierung des Routers durch die gesicherte Vorrichtung, wobei die gesicherte Vorrichtung dazu ausgelegt ist, eine Nachricht zu erzeugen und die erzeugte Nachricht im Anschluss an die Ausführung des besagten mindestens einen Teils eines Routing-Protokolls zu signieren und die signierte Nachricht an den Router zu übertragen.

2. Router nach Anspruch 1, umfassend eine Korrespondenztabelle zwischen ersten Teilen eines Routing-Protokolls und dem Router und zwischen zweiten Teilen des Routing-Protokolls und der gesicherten Vorrichtung, wobei sich die ersten und zweiten Teile des Protokolls voneinander unterscheiden und das Routing-Protokoll komplett definieren.

3. Router nach Anspruch 1 oder 2, **dadurch gekennzeichnet, dass** der besagte mindestens eine Teil des Routing-Protokolls einem Algorithmus für die Erstellung einer von dem Routing-Protokoll geforderten Steuernachricht entspricht.

4. Gesicherte Vorrichtung, welche mit einem in einem Kommunikationsnetzwerk (RC) umfassten Router assoziiert ist, umfassend eine Schnittstelle (IDC) für die Kommunikation mit dem Router nach einer Authentifizierung des Routers durch die gesicherte Vorrichtung, **dadurch gekennzeichnet, dass** sie umfasst:
Mittel (UDC) zum Ausführen mindestens eines Teils eines Routing-Protokolls unter der Steuerung des Routers, wobei der Router einen auszuführenden Teil des Routing-Protokolls identifiziert und ermittelt hat, durch welche Entität unter dem Router und der gesicherten Vorrichtung der identifizierte Teil des Routing-Protokolls auszuführen ist, wobei der besagte Teil des Routing-Protokolls einem Algorithmus für die Erstellung oder Änderung einer in der gesicherten Vorrichtung gespeicherten Routing-Tabelle entspricht,
Mittel (UDC) zum Erzeugen einer Nachricht und zum Signieren der erzeugten Nachricht im Anschluss an die Ausführung des besagten mindestens einen Teils eines Routing-Protokolls und zum Übertragen der signierten Nachricht an den Router.

5. Vorrichtung nach Anspruch 4, **dadurch gekennzeichnet, dass** die gesicherte Vorrichtung eine Chipkarte ist.

6. Verfahren zur gesicherten Ausführung eines Teils eines Routing-Protokolls in einem Kommunikationsnetzwerk (RC), **dadurch gekennzeichnet, dass** es in einem mit einer gesicherten Vorrichtung assoziierten Router (RT) die folgenden Schritte umfasst:
Identifizieren (E1) eines auszuführenden Teils eines Routing-Protokolls, wobei der besagte Teil des Routing-Protokolls einem Algorithmus für die Erstellung oder Änderung einer in der gesicherten Vorrichtung gespeicherten Routing-Tabelle entspricht,
Ermitteln (E2), durch welche Entität unter dem Router und der mit dem Router assoziierten gesicherten Vorrichtung der identifizierte Teil des Routing-Protokolls auszuführen ist,
im Anschluss an eine Authentifizierung des Routers durch die gesicherte Vorrichtung, Steuern (E4) der Ausführung des Teils eines Routing-Protokolls durch die gesicherte Vorrichtung,
und dass es in der gesicherten Vorrichtung die Schritte des Ausführens (E5) des Teils eines Routing-Protokolls unter der Steuerung des Routers, des Erzeugens (E6) einer Nachricht und des Signierens der erzeugten Nachricht im Anschluss an die Ausführung des besagten Teils eines Routing-Protokolls und des Übertragens (E7) der signierten Nachricht an den Router umfasst.

## Claims

1. A router associated with a secure device (DC) and included within a communication network (RC), comprising an interface (IRT) for communicating with the secure device after the router has been authenticated by the secure device, **characterized in that** it comprises:
means (INT) for identifying a routing protocol portion to be executed, said routing protocol portion corresponding to an algorithm for creating or editing a routing table saved in the secure device,
means (INT) for determining which entity, the router or the secure device, is to execute the routing protocol portion,
means (INT) for controlling the execution of the identified routing protocol part by the secure device, the secure device being capable of producing a message and signing the product message after executing at least one routing protocol portion and transmitting the signed message to the router.

2. A router according to claim 1, comprising a lookup table between first routing protocol portions and the router and between second routing protocol portions and the secure device, the first and second protocol portions being distinct and defining the routing protocol in full.

3. A router according to claim 1 or 2, **characterized in that** said at least one routing protocol portion corresponds to an algorithm for creating a control message required by the routing protocol.

4. A secure device associated with a router included in a communication network (RC), comprising an interface (IDC) for communicating with the router after the secure device has authenticated the router, **characterized in that** it comprises:
means (UDC) for executing at least one routing protocol portion under orders from the router, the router having identified a routing protocol portion to be executed and determined which entity, the router or the secure device, is to execute the identified routing protocol portion, said routing protocol portion corresponding to an algorithm for creating or editing a routing table saved in the secure device,
means (UDC) for producing a message and signing the produced message following the execution of said at least one portion of a routing protocol and to transmit the signed message to the router.

5. A device according to claim 4, **characterized in that** the secure device is a chip card.

6. A method for securely executing a routing protocol portion in a communication network (RC), **characterized in that** it comprises within a router (RT) associated with a secure device the steps of:
identifying (E1) a routing protocol portion to be executed, said routing protocol portion corresponding to an algorithm for creating or editing a routing table saved in the secure device,
determining (E2) which entity, the router or the secure device, is to execute the routing protocol portion, and
after the secure device has authenticated the router, ordering (E4) the execution of the routing protocol portion by the secure device,
and **in that** it comprises within the secure device the steps of executing (E5) the routing protocol portion under orders from the router, producing (E6) a message and signing the produced message following the execution of said at least one routing protocol portion, and transmitting (E7) the signed message to the router.
